# EUROPÄISCHE PATENTSCHRIFT

(11) **EP 2 731 215 B1**
(45) Veröffentlichungstag und Bekanntmachung des Hinweises auf die Patenterteilung: **30.12.2015**
(21) Anmeldenummer: 13004810.1
(22) Anmeldetag: 07.10.2013
(51) Int. Cl.: H02G 3/04

(54) **Kabelführungseinrichtung zur Verwendung bei der Installation von Kabeln**
Cable guiding device for use in the installation of cables
Dispositif de guidage de câble destiné à être utilisé pour l'installation de câbles

(30) Priorität: 12.10.2012 DE 102012020105
(43) Veröffentlichungstag der Anmeldung: 14.05.2014
(73) Patentinhaber: Jungheinrich Aktiengesellschaft, 22047 Hamburg (DE)
(72) Erfinder: Kral, Marko, 06114 Halle/Saale (DE); Mittag, Stefan, 04277 Leipzig (DE)
(74) Vertreter: Hauck Patentanwaltspartnerschaft mbB

(56) Entgegenhaltungen:
- EP-A2- 1 953 889
- CN-U- 201 547 400
- CN-Y- 201 207 314
- DE-U1- 8 715 557
- US-A- 5 962 814
- US-B1- 6 522 823

## Beschreibung

Die vorliegende Erfindung betrifft eine Kabelführungseinrichtung zur Verwendung bei der Installation von Kabeln, insbesondere im Batterieraum eines Fahrzeugs, bevorzugt im Batterieraum eines Flurförderzeugs.

Ein Flurförderzeug, wie beispielsweise Hubwagen, Gabelstapler oder Kommissionierer weisen eine Vielzahl elektrischer Leitungen auf, die einen elektrischen Antrieb mit einer in dem Fahrzeug mitgeführten Batterie verbinden. Darüber hinaus sind die Fahrzeuge mit einer Vielzahl von elektrischen Signalleitungen ausgestattet, über die die elektrischen Systeme des Flurförderzeugs miteinander verbunden sind. Bei der Verlegung dieser Leitungen in Form von einzelnen Kabeln oder Kabelsträngen ist es in der Regel nicht vermeidbar, die Leitungen auch um Kanten und Ecken zu führen. Insbesondere bei den aus einem Batterieraum des Fahrzeugs herausgeführten Kabeln können Beschädigungen an der Kabelisolation auftreten. Der Batterieraum eines Flurförderzeugs weist in der Regel einen Batterietrog auf, über dessen umgebende Wandung das oder die Kabel geführt sind.

Eine Beschädigung der Kabelisolierung bei einem in einem Flurförderzeug verlegten Kabel oder Kabelbündel kann zu einer erheblichen Beeinträchtigung des Fahrzeugbetriebs und zu arbeitssicherheitstechnischen Problemen führen.

Aus DE G 87 15 557.5 ist eine Führungsvorrichtung für ein Batteriekabel in einem Flurförderzeug bekannt, die an eine Seitenwand anklippbar ist und das Kabel in einer horizontalen Ebene um 90° umlenkt.

Aus US 6,522,823 ist ein Kabelauslass aus einer Rinne bekannt, mit dem ein Kabel über eine Seitenwand geführt werden kann.

Aus EP 1 953 889 A2 ist ein Verbindungskabel zwischen einer Batterie und einem Antriebsmotor eines Flurförderzeuges bekannt. Das Verbindungskabel hängt in einer Kabelführung mit einer vorgegebenen Krümmung, die im Schlaufenbereich annähernd passend für das Kabel geformt ist.

Aus DE 2007 018 333 A1 ist eine Kabelführungseinrichtung bekannt geworden, die ein Befestigungselement und ein mit dem Befestigungselement verbundenes Führungselement aufweist. Das Befestigungselement ist dazu eingerichtet, die Kabelführungseinrichtung an einer ersten von zwei Kanten bildenden Fläche zu befestigen. Das Befestigungselement besitzt eine gekrümmt ausgebildete Auflagefläche für ein zu führendes Kabel, wobei die Krümmung der Auflagefläche an einen vorbestimmten Biegeradius eines zu verlegenden Kabels angepasst ist. Eine Befestigung der Kabel auf der Auflagefläche erfolgt über Kabelbinder, die in seitlichen Ausnehmungen der Auflagefläche ihr Widerlager finden.

Der Erfindung liegt die Aufgabe zugrunde, eine Kabelführungseinrichtung mit einfachen Mitteln bereitzustellen, die eine schnelle und leichte Montage erlaubt.

Die Aufgabe wird durch eine Kabelrührungseinrichtung mit den Merkmalen aus Anspruch 1 gelöst. Vorteilhafte Ausgestaltungen sind in den Unteransprüchen und dem Ausführungsbeispiel beschrieben.

Die erfindungsgemäße Kabelführungseinrichtung ist zur Verwendung bei der Installation von Kabeln im Batterieraum eines Fahrzeugs, insbesondere eines Flurförderzeugs, vorgesehen. Sie besitzt ein Befestigungselement, das einen Schlitz zum Aufstecken der Kabelführungseinrichtung auf eine flache Wand besitzt. Das Befestigungselement besitzt ferner auf seiner von dem Schlitz abgewandten Seite eine sich in einem Bogen erstreckende Kabelführungsfläche. Bei der erfindungsgemäßen Kabelführungseinrichtung ist die Kabelführungsfläche mit mindestens einer Nut zur Aufnahme eines Kabels ausgestattet. Die Nut erstreckt sich dabei in der gebogenen Längsrichtung der Kabelführungsfläche, so dass das Kabel bogenförmig in der Nut angeordnet werden kann. Die erfindungsgemäße Kabelführungseinrichtung ermöglicht somit die Realisierung eines definierten Kabelverlaufes, sowohl in Längs- als auch in Querrichtung des Kabels. In die Kabelführungseinrichtung, die mit ihrem Schlitz auf eine flache Wand aufgesteckt werden kann, wird ein Kontakt des Kabels mit einer scharfen Kante oder der Wand vermieden, so dass eine Beschädigung der Isolierung ausbleibt. Hinzu kommt, dass die erfindungsgemäße Kabeleinführungseinrichtung mit ihrem Schlitz einfach montiert und auch in bestehenden Anwendungen ohne weiteres nachgerüstet werden kann.

Erfindungsgemäß weist die Kabelführungsfläche, bezogen auf ihre Längsrichtung, einen Bogen auf, der einen Winkel von mindestens 70° überstreicht. Die Bogenlänge mit einem Winkel von mindestens 70° gestattet es, das Kabel mit einer definierten Führung um mindestens einen Winkel von 70° umzulenken, so dass es beispielsweise aus einem Batterieraum heraus geführt werden kann.

Nach der Erfindung ist mindestens eine Nutwand elastisch oder nach innen vorstehend mit einem Hinterschnitt ausgebildet derart, dass ein in der Nut angeordnetes Kabel gedämpft in der Nut gehalten werden kann. Auf diese Weise kann eine erste Fixierung des Kabels in der Kabelführungseinrichtung durch ein Hereindrücken des Kabels in die Nut erfolgen.

In einer bevorzugten Ausgestaltung weist die Kabelführungseinrichtung mindestens zwei parallel zueinander verlaufende Nuten auf, von denen jede zur Aufnahme eines Kabels ausgebildet ist. Wenn im Zusammenhang mit der Erfindung auf die Aufnahme eines Kabels in der Nut abgestellt wird, so ist hierbei auch stets der Fall erfasst, dass beispielsweise ein Kabelstrang aus Leitungen, beispielsweise Signalleitungen ein aufzunehmendes Kabel bilden. Die zwei parallel zueinander verlaufenden Nuten in der Kabelführungsfläche erlauben es, Kabelpaare, wie sie beispielsweise zu einer Batterie im Fahrzeug geführt werden, parallel zueinander über die Kante zu führen.

In einer bevorzugten Ausgestaltung ist das Befestigungselement in der Kabelführungsfläche mit Vertiefungen an der Oberkante der Nut ausgestattet. Die Vertiefungen erstrecken sich quer oder schräg zur Längsrichtung der Nut. Ferner ist das Befestigungselement mit einem Gegenlager für ein durch die Vertiefung geführtes bandförmiges Befestigungsmittel ausgestattet. Über das bandförmige Befestigungsmittel können in der Nut angeordnete Kabel dauerhaft in der Nut gesichert werden, wobei das bandförmige Befestigungsmittel, wie beispielsweise ein Kabelbinder, durch die Vertiefungen und das am Befestigungselement ausgebildete Gegenlager läuft. In einer bevorzugten Ausgestaltung ist das Gegenlager beispielsweise als ein Durchgangsloch oder eine Aussparung in dem Befestigungselement ausgebildet, so dass das bandförmige Befestigungsmittel durch das Durchgangsloch hindurchgeführt, die Kabel in der Nut sichert.

In einer bevorzugten Ausgestaltung der erfindungsgemäßen Kabelführungseinrichtung besitzt der Schlitz elastische, nach innen in den Schlitz vorstehende Zähne.

Über die Zähne wird das Befestigungselement in seiner aufgesteckten Position auf der Wand gesichert, sowohl gegen ein seitliches Verrutschen als auch gegen ein versehentliches Abnehmen.

In einer bevorzugten Ausgestaltung ist das Befestigungselement einstückig, bevorzugt als Spritzgussteil, hergestellt. Das so hergestellte einstückige Befestigungselement kann beispielsweise aus einem Kunststoffmaterial hergestellt sein, das elastisch ausgebildet ist und somit einen guten Sitz auf der Wand aufweist und die in der Nut angeordneten Kabeln federnd lagert.

Die erfindungsgemäße Aufgabe wird ebenfalls durch ein System mit einem Batterieraum gelöst, der eine Wand und ein aus dem Batterieraum herausgeführtes Kabel aufweist, wobei die vorstehende Kabelführungseinrichtung auf die Wand des Batterieraums aufgesteckt und das Kabel in der Nut der Kabelführungsfläche angeordnet ist.

Ein bevorzugtes Ausführungsbeispiel der erfindungsgemäßen Kabelführungseinrichtung wird anhand der nachfolgenden Figuren näher beschrieben. Es zeigen:
- Fig. 1: eine geschnittene Ansicht von der Seite auf einen Batterieraum mit einer Kabelführungseinrichtung,
- Fig. 2: eine perspektivische Ansicht von schräg oben auf den Batterieraum gemäß Fig. 1,
- Fig. 3: eine Ansicht von oben auf den Batterieraum gemäß Fig. 1,
- Fig. 4: eine Ansicht der Kabelführungseinrichtung von oben,
- Fig. 5: eine Ansicht auf die Kabelführungseinrichtung von vorne,
- Fig. 6: eine Ansicht von der Seite auf die Kabelführungseinrichtung und
- Fig. 7: einen Schnitt entlang der Linie VII - VII in Fig. 4.

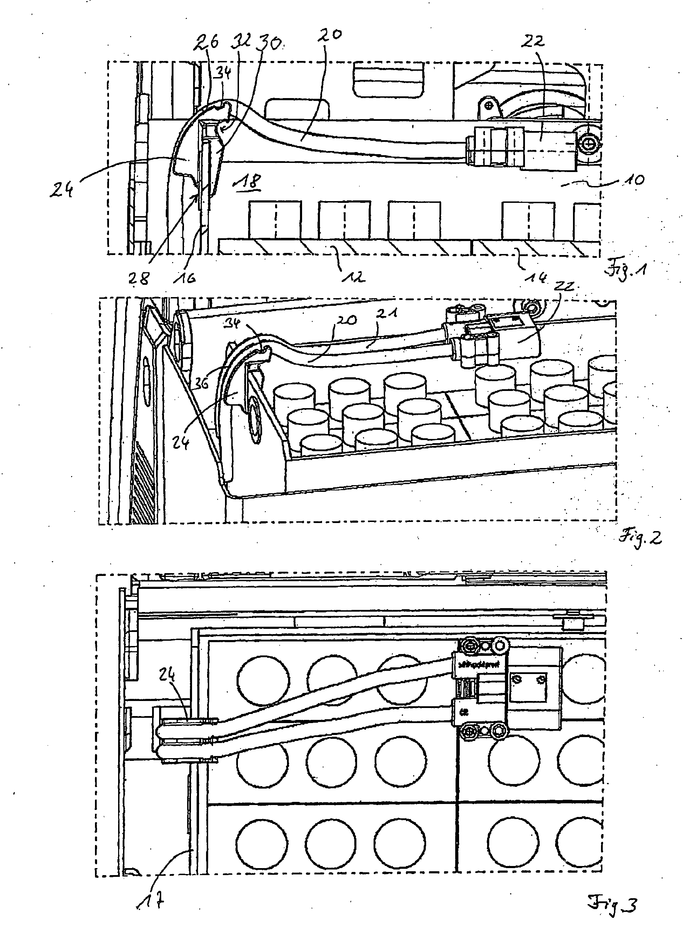

Fig. 1 zeigt in einer geschnittenen Darstellung einen Batterieraum 10, in dem mehrere Batterieelemente 12, 14 angeordnet sind. Der Batterieraum 10 besitzt eine Seitenwand 16, die aus Metall oder Kunststoff besteht und eine gleichmäßige Dicke besitzt. Nach hinten ist der Batterieraum durch eine Batteriewand 18 begrenzt. Ein Kabel 20 ist über einen an der hinteren Batteriewand 18 befestigten Anschlussadapter 22 mit den Anschlüssen (nicht dargestellt) der Batterie verbunden. Das Kabel 20 wird aus dem Batterieraum 10 im Bereich der Seitenwand 16 ausgeführt.

Auf die Seitenwand 16 aufgesteckt ist eine Kabelführungseinrichtung 24, die ein Befestigungselement mit einer bogenförmig verlaufenden Kabelführungsfläche 26 besitzt. Die Kabelführungsfläche 26 beginnt oberhalb der Seitenwand 16 und erstreckt sich bogenförmig über einen Winkelbereich von ungefähr 90°, so dass sie parallel zur Seitenwand 16 endet. Die Kabelführungsftäche 16 besitzt eine vertiefte Nut, die das Kabel 12 aufnimmt.

Die Kabelführungseinrichtung 24 besitzt einen Schlitz 28, mit dem sie auf die Seitenwand 16 aufgesetzt ist. Der Schlitz 28 wird auf seiner zum Batterieraum 10 weisenden Seite durch eine Zunge 30 begrenzt, die integral mit der Kabelführungeinrichtung 24 ausgebildet ist. Zwischen der Zunge 30 und der Kabelführungsfläche 26 ist eine Aussparung 32 ausgebildet, die als Gegenlager für ein bandförmiges Befestigungsmittel (nicht dargestellt) dient. Oberhalb der Aussparung 32 ist in der Kabelführungsfläche 26 eine Vertiefung 34 vorgesehen, die ein bandförmiges Befestigungsmittel aufnehmen kann. Ein Kabelbinder (nicht dargestellt) kann beispielsweise in der Aussparung 32 angeordnet und durch die Vertiefung 34 geführt werden, um das Kabel 20 in der Kabelführungsfläche bzw. in der darin ausgebildeten Nut zu sichern. Alternativ oder zusätzlich zu der Aussparung 32 kann auch eine Durchgangsbohrung vorgesehen sein, durch die ein bandförmiges Befestigungsmittel geführt ist. Wie in Fig. 1 zu erkennen, erfolgt die Sicherung des Kabels 20 zu Beginn der Kabelführungsfläche 26, also dort, wo das Kabel 20 in den Batterieraum 10 und die Nut auf der Kabelführungsfläche eintritt.

Fig. 2 zeigt in der perspektivischen Ansicht von schräg oben, dass von dem Kabelanschlussadapter 22 zwei Kabel 20 und 21 parallel zu der Kabelführungseinrichtung 24 geführt sind. Die Kabelführungseinrichtung 24 besitzt zwei parallel zueinander verlaufende Nuten zur Aufnahme der Kabel 20 und 21, wobei die Nuten durch eine zentral verlaufende Nutwand 36 voneinander getrennt sind. Die Nutwand 36 besitzt ebenfalls eine Vertiefung 34 zur Aufnahme eines bandförmigen Befestigungsmittels.

Wie in Fig. 3 zu erkennen, können die Kabel 20 und 21 auch schräg in die Kabelführungseinrichtung 24 geführt werden. Die Kabelführungseinrichtung 24 führt die Kabel 20 und 21 einerseits in einer definierten Biegung um die Kante 17 der Seitenwand 16 herum und stellt andererseits sicher, dass die Kabel nach Verlassen der Kabelführungsfläche sich senkrecht in Richtung des Bogens weiter erstrecken.

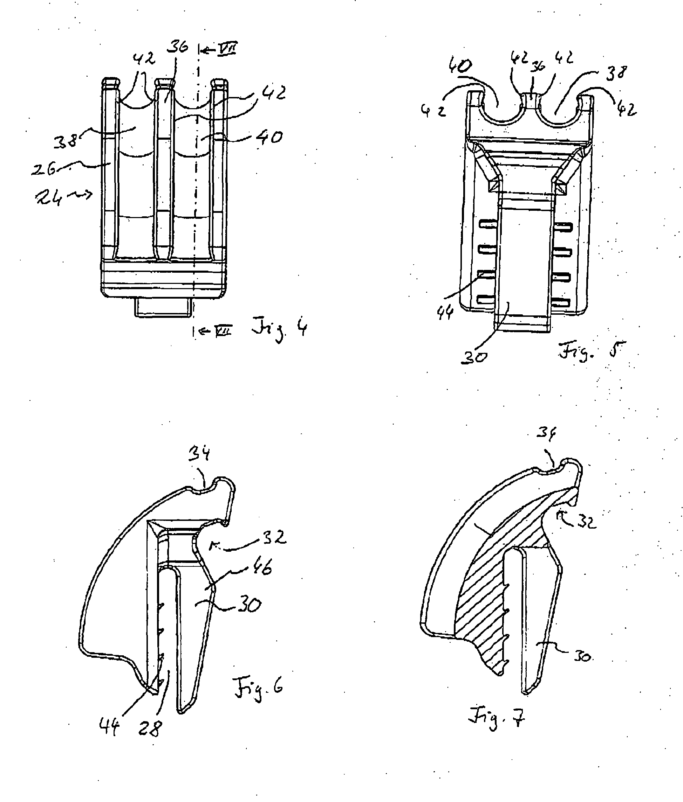

Fig. 4 zeigt die Kabelführungseinrichtung 24, die entlang ihrer bogenförmig verlaufenden Kabelführungsfläche 26 zwei Nuten 38 und 40 besitzt. Die Nuten 38 und 40 besitzen einen bogenförmig gewölbten Grund. Die Nutwände besitzen jeweils Vorsprünge 42, die einen Hinterschnitt bilden. Auch die Nuttrennwand 36 besitzt seitlich jeweils Vorsprünge 42, die die in die Nuten 38 und 40 aufgenommenen Kabel sichern. Die Tiefe der Nuten 38 und 40 ist so dimensioniert, dass das aufzunehmende Kabel um mehr als die Hälfte in die Nut eintaucht und über die Vorsprünge 42 der Nutwände und der Nuttrennwand klemmend in der Nut gehalten ist.

Fig. 5 zeigt eine Ansicht von vorne auf den Eintrittsbereich der Nuten 38 und 40. Im oberen Bereich der Nuten 38 und 40 ist der gewölbte Grund der Nuten zu erkennen, dessen Krümmungsradius bevorzugt dem Kabelradius entspricht.

In der Ansicht von der Seite gemäß Fig. 6 ist die Zunge 30 der Kabelführungseinrichtung zu erkennen. Die Zunge 30 begrenzt einen Schlitz 28, in den Zähne 44 vorstehen. Die Zähne 44 sind an einem der Zunge gegenüberliegenden Abschnitt der Kabelführungseinrichtung 24 angeordnet und erstrecken sich quer zur Längsrichtung der Zunge 30. Die Zunge 30 verjüngt sich zu ihrem freien Ende hin und besitzt im Bereich des Schlitzgrundes einen vorstehenden Bereich 46, über den der Klemmdruck der Zunge aufgebaut werden kann. Oberhalb der Zunge 30 ist eine Materialaussparung vorgesehen, die als Aussparung 32 als Gegenlager für ein bandförmiges Befestigungsmittel ausgebildet ist. Wie in der Ansicht aus Fig. 6 zu erkennen, besitzt die Zunge 30 eine geringe Breite als die Kabelführungsfläche mit den nebeneinander angeordneten Nuten 38 und 40.

Aus Fig. 7 ist zu erkennen, dass die Vertiefung 34 in den Nutenwänden und in der Nutrennwand 36 nahe dem Eintrittsbereich in die Nuten 38 und 40 vorgesehen ist. In dem Schnitt ist zu erkennen, dass die Zunge 30 eine geringere Breite als der Körper der Kabelführungseinrichtung besitzt.

Die dargestellte Kabelführungseinrichtung kann als Bauteil nachträglich in ein Flurförderzeug eingebaut werden, indem diese mit ihrem Schlitz auf die Blechwand gesteckt wird. Hierdurch ist eine schnelle und intuitive Bedienung ohne spezielle Kenntnisse und Werkzeuge möglich. Als Werkstoff kann ein Kunststoff oder ein ähnlich weiches Material verwendet werden, wobei der Werkstoff die erforderliche Brandklasse erfüllt. In der dargestellten Ausführungsform sind die Nuten 38, 40 für eine Leitung mit einem definierten Durchmesser ausgelegt, beispielsweise 35 mm², so dass diese Leitung klemmend in der Kabelführungseinrichtung sitzt. Auf einen Kabelbinder zur zusätzlichen Befestigung kann bei Kabeln mit diesem Durchmesser verzichtet werden. Werden Kabel mit einem geringeren Durchmesser über die Kabelführungseinrichtung geführt, entfällt die klemmende Wirkung weitgehend und die Kabel werden ausschließlich über den Kabelbinder als bandförmiges Befestigungsmittel in den Nuten gehalten.

### Bezugszeichenliste

- 10: Batterieraum
- 12: Batterieelement
- 14: Batterieelement
- 16: Seitenwand
- 17: Kante
- 18: Batteriewand
- 20: Kabel
- 21: Kabel
- 22: Anschlussadapter
- 24: Kabelführungseinrichtung
- 26: Kabelführungsfläche
- 28: Schlitz
- 30: Zunge
- 32: Aussparung
- 34: Vertiefung
- 36: Nutwand
- 38: Nut
- 40: Nut
- 42: Vorsprünge
- 44: Zähne
- 46: vorstehender Bereich

## Patentansprüche

1. Kabelführungseinrichtung zur Verwendung bei der Installation von Kabeln im Batterieraum eines Fahrzeugs, insbesondere eines Flurförderzeugs, die ein Befestigungselement aufweist, das einen Schlitz zum Aufstecken der Kabelführungseinrichtung auf eine flache Wand und eine Kabelführungsfläche besitzt, die sich auf der dem Schlitz abgewandten Seite in einem Bogen erstreckt, wobei die Kabelführungsfläche mindestens eine Nut zur Aufnahme eines Kabels aufweist, **dadurch gekennzeichnet, dass** mindestens eine Nutwand elastisch und/oder nach innen vorstehend mit einem Hinterschnitt ausgebildet ist, so dass ein in der Nut angeordnetes Kabel klemmend gehalten werden kann, und die Kabelführungsfläche, bezogen auf ihre Längsrichtung, einen Bogen aufweist, der einen Winkel von mindestens 70° überstreicht und oberhalb der Seitenwand beginnend parallel zur Seitenwand endet.

2. Kabelführungseinrichtung nach Anspruch 1, **dadurch gekennzeichnet, dass** mindestens zwei parallel verlaufende Nuten (38, 40) vorgesehen sind, von denen jede zur Aufnahme eines Kabels ausgebildet ist.

3. Kabelführungseinrichtung nach Anspruch 1 oder 2, **dadurch gekennzeichnet, dass** das Befestigungselement in der Kabelführungsfläche Vertiefungen (34) an der Oberkante der Nut aufweist, wobei die Vertiefung (34) quer oder schräg zur Längsrichtung der Nut verläuft, und das Befestigungselement ein Gegenlager für ein durch die Vertiefung geführtes bandförmiges Befestigungsmittel aufweist.

4. Kabelführungseinrichtung nach Anspruch 3, **dadurch gekennzeichnet, dass** das Gegenlager als ein Durchgangsloch oder eine Aussparung (32) in dem Befestigungselement ausgebildet ist.

5. Kabelführungseinrichtung nach einem der Ansprüche 1 bis 4, **dadurch gekennzeichnet, dass** der Schlitz elastische und nach innen in den Schlitzraum vorstehende Zähne aufweist.

6. Kabelführungseinrichtung nach einem der Ansprüche 1 bis 5, **dadurch gekennzeichnet, dass** das Befestigungselement einstückig, insbesondere als Spritzgussteil, ausgebildet ist.

7. System mit einem Batterieraum, der eine Wand und ein aus diesem geführtes Kabel aufweist, wobei eine Kabelführungseinrichtung nach einem der Ansprüche 1 bis 6 auf die Wand des Batterieraumes aufgesteckt und das Kabel in der Nut der Kabelführungsfläche angeordnet ist.

8. Flurförderzeug mit einem System gemäß Anspruch 7.

## Claims

1. A cable guiding device for use in the installation of cables in the battery compartment of a vehicle, in particular of an industrial truck, which has a fastening element, which has a slit for mounting the cable guiding device on a flat wall and a cable guiding surface, which extends in an arc on the side facing away from the slit, wherein the cable guiding surface has at least one groove for receiving a cable, **characterized in that** at least one groove wall is designed elastically and/or protruding inwards with an undercut, so that a cable arranged in the groove can be held clamped, and the cable guiding surface, in relation to its longitudinal direction, has an arc, which extends over an angle of at least 70° and ends beginning parallel to the side wall above the side wall.

2. The cable guiding device according to claim 1, **characterized in that** at least two parallel progressing grooves (38, 40) are provided, each of which is designed to receive a cable.

3. The cable guiding device according to claim 1 or 2, **characterized in that** the fastening element in the cable guiding surface has recesses (34) on the top edge of the groove, wherein the recess (34) runs transversely or diagonally to the longitudinal direction of the groove, and the fastening element has a counter bearing for a belt-like fastening means guided through the recess.

4. The cable guiding device according to claim 3, **characterized in that** the counter bearing is designed as a through hole or a gap (32) in the fastening element.

5. The cable guiding device according to one of claims 1 to 4, **characterized in that** the slit has elastic teeth protruding inwards into the slit space.

6. The cable guiding device according to one of claims 1 to 5, **characterized in that** the fastening element is designed as one piece, in particular as an injection molded part.

7. A system with a battery compartment, which has a wall and a cable guided out of it, wherein a cable guiding device according to one of claims 1 to 6 is mounted on the wall of the battery compartment and the cable is arranged in the groove of the cable guiding surface.

8. An industrial truck with a system according to claim 7.

## Revendications

1. Dispositif de guidage de câble destiné à être utilisé pour l'installation de câbles dans le compartiment à batterie d'un véhicule, en particulier un chariot de manutention, présentant un élément de fixation qui possède une fente permettant d'attacher le dispositif de guidage de câble sur une paroi plane et une surface de guidage de câble qui s'étend sur le côté opposé à la fente en un arc, la surface de guidage de câble présentant au moins une rainure pour le logement d'un câble, **caractérisé en ce que** au moins une paroi de rainure est élastique et/ou fait saillie vers l'intérieur avec une coupe arrière de manière à ce qu'un câble disposé dans la rainure puisse être fixé par serrage, et la surface de guidage de câble présente, par rapport à son sens longitudinal, un arc qui couvre un angle d'au moins 70° et se termine, partant d'une position située au-dessus de la paroi latérale, parallèlement à la paroi latérale.

2. Dispositif de guidage de câble selon la revendication 1, **caractérisé en ce que** au moins deux rainures parallèles (38, 40) sont prévues, dont chacune est formée pour le logement d'un câble.

3. Dispositif de guidage de câble selon la revendication 1 ou 2, **caractérisé en ce que** l'élément de fixation présente dans la surface de guidage de câble des évidements (34) sur l'arête supérieure de la rainure, dans lequel l'évidement (34) est transversal ou en biais par rapport au sens longitudinal de la rainure cours, et l'élément de fixation présente un palier-support pour un moyen de fixation en forme de bande guidé à travers l'évidement.

4. Dispositif de guidage de câble selon la revendication 3, **caractérisé en ce que** le palier-support est formé comme un trou de passage ou un creux (32) dans l'élément de fixation.

5. Dispositif de guidage de câble selon l'une quelconque des revendications 1 à 4, **caractérisé en ce que** la fente présente des dents élastiques et faisant saillie vers l'intérieur dans l'espace de fente.

6. Dispositif de guidage de câble selon l'une quelconque des revendications 1 à 5, **caractérisé en ce que** l'élément de fixation est formé en une pièce, en particulier comme pièce moulée par injection.

7. Système avec un compartiment à batterie présentant une paroi et un câble conduit hors de cette dernière, dans lequel un dispositif de guidage de câble selon l'une quelconque des revendications 1 à 6 est attaché à la paroi du compartiment à batterie et le câble est disposé dans la rainure de la surface de guidage de câble.

8. Chariot de manutention avec un système selon la revendication 7.
